# EUROPÄISCHE PATENTSCHRIFT

(11) **EP 2 821 283 B1**
(45) Veröffentlichungstag und Bekanntmachung des Hinweises auf die Patenterteilung: **13.07.2016**
(21) Anmeldenummer: 14168039.7
(22) Anmeldetag: 13.05.2014
(51) Int. Cl.: B60Q 9/00, B60R 21/0134, B60R 21/0136

(54) **Verfahren und Vorrichtung zur schnellen Kollisionsvorbereitung eines Kraftfahrzeugs**
Method and device for rapid collision preparation of a motor vehicle
Procédé et dispositif de préparation rapide à la collision d'un véhicule automobile

(30) Priorität: 05.07.2013 DE 102013213226
(43) Veröffentlichungstag der Anmeldung: 07.01.2015
(73) Patentinhaber: ROBERT BOSCH GMBH, 70442 Stuttgart (DE)
(72) Erfinder: Ludwig, Ronny, 72770 Reutlingen (DE)

(56) Entgegenhaltungen:
- EP-A1- 1 691 213
- DE-A1- 10 317 637
- US-A1- 2007 237 027

## Beschreibung

Die Erfindung betrifft ein Verfahren zur schnellen Kollisionsvorbereitung eines Kraftfahrzeugs, bei welchem ein Signal einer Sensoreinheit, die einen Ultraschallsensor und einen Beschleunigungssensor umfasst, zur Kollisionserkennung ausgewertet wird, gemäß dem Oberbegriff von Anspruch 1. Weiterhin betrifft die Erfindung eine Vorrichtung zur schnellen Kollisionsvorbereitung eines Kraftfahrzeugs gemäß dem Oberbegriff von Anspruch 8. Ein derartiges Verfahren und eine derartige Vorrichtung ist aus der EP 1 691 213 A1 bekannt.

### STAND DER TECHNIK

Aus der DE 10 2006 024 667 A1 ist ein Verfahren zur Detektion eines Fußgängeraufpralls bekannt. Eine Ansteuerentscheidung über einen Aufprall erfolgt in Abhängigkeit von einem ersten Signal einer Aufprallsensorik und einem zweiten Signal von weiteren Fahrzeugsystemen, die Einfluss auf die Fahrdynamik haben. Die Aufprallsensorik umfasst dabei einen Beschleunigungssensor, welcher gemeinsam mit einem Ultraschallsensor in einer Sensoreinheit angeordnet ist, welche hinter der Stoßfängerverkleidung des Kraftfahrzeugs angeordnet ist. Die Signale der Sensoreinheit werden ausgewertet, um zu entscheiden, ob ein Fußgängerschutzmittel angesteuert werden soll. Für diese Entscheidung wird ein Signal des Beschleunigungssensors mit einem Schwellwert verglichen, um festzustellen, ob eine Kollision vorliegt. Dieser Schwellwert wird in Abhängigkeit eines Signals des weiteren Fahrzeugsystems, beispielsweise eines Bremsassistenten, eingestellt.

Hierbei ist nachteilig, dass bei diesem Verfahren eine Kollision tatsächlich erfolgt sein muss, bevor die Fußgängerschutzmittel angesteuert werden. Hat die Kollision zwischen dem Fußgänger und dem Kraftfahrzeug bereits statt gefunden, so erfolgt das Auslösen der Fußgängerschutzmittel möglicherweise zu spät, um den Fußgänger vor Verletzungen zu bewahren.

### OFFENBARUNG DER ERFINDUNG

Es ist daher Aufgabe der Erfindung, ein Verfahren und eine Vorrichtung,zur schnellen Kollisionsvorbereitung eines Kraftfahrzeugs bereitzustellen, bei welchem Verletzungen des Fußgängers minimiert oder ganz verhindert werden können.

Zur Lösung der Aufgabe wird ein Verfahren mit sämtlichen Merkmalen des Anspruchs 1, insbesondere des kennzeichnenden Teils, vorgeschlagen. Vorteilhafte Weiterbildungen des Verfahrens sind in den abhängigen Verfahrensansprüchen angegeben. Die Aufgabe wird weiterhin gelöst durch eine Vorrichtung zur schnellen Kollisionsvorbereitung eines Kraftfahrzeugs mit sämtlichen Merkmalen des unabhängigen Anspruchs 8, insbesondere des kennzeichnenden Teils. Vorteilhafte Weiterbildungen der Vorrichtung sind in den abhängigen Vorrichtungsansprüchen angegeben. Merkmale und Details, die im Zusammenhang mit dem erfindungsgemäßen Verfahren beschrieben sind, gelten dabei auch im Zusammenhang mit der erfindungsgemäßen Vorrichtung und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass zur schnellen Kollisionsvorbereitung eines Kraftfahrzeugs die Sensoreinheit ein insbesondere gemeinsames Signal des Ultraschallsensors und des Beschleunigungssensors erzeugt und ein Fußgängerschutzsystem vor der eigentlichen Kollision aktiviert wird. Unter einem Fußgängerschutzsystem kann beispielsweise ein Airbagsystem verstanden werden, das im Falle des Fußgängerschutzes an der Außenseite des Kraftfahrzeugs, beispielsweise am Stoßfänger oder aber im Bereich der Motorhaube befestigt ist. Durch das Aktivieren des Fußgängerschutzsystems wird dieses in Bereitschaft versetzt, wodurch wertvolle Zeit eingespart wird, um bei einem Aufprall das Fußgängerschutzsystem auszulösen und somit den Fußgänger vor erheblichem Schaden zu bewahren.

Durch die Kombination des Ultraschallsensors und des Beschleunigungssensors in nur einer Sensoreinheit wird nur ein Einbauort für Ultraschall- bzw. Beschleunigungssensor benötigt. Eine solche Sensoreinheit erlaubt sehr kurze Reaktionszeiten zwischen der Kollisionserkennung und der Auslösung des Fußgängerschutzsystems, wenn der Beschleunigungssensor den Aufprall wahrnimmt. Dabei erkennt der Ultraschallsensor bereits das Objekt, welches mit dem Kraftfahrzeug kollidieren könnte, bevor der Beschleunigungssensor den Aufprall detektiert. Die Kombination ermöglicht mit einer einzigen Sensoreinheit die Messung des Abstands zu dem Objekt und/oder die Erkennung eines Objekts mittels Ultraschall und die gleichzeitige Messung einer Beschleunigung bei der Kollision mit dem Objekt.

Dabei wird aber nur ein einziges Steuersignal von der Sensoreinheit abgegeben, welches das Signal des Ultraschallsensors und das Signal des Beschleunigungssensors kombiniert, welches von einem zentralen Steuergerät ausgewertet wird. Das Signal des Beschieunigungssensors wird auf das Signal des Ultraschallsensors aufmoduliert. In einer Alternative kann das Signal der Sensoreinheit auch einer Matrix entsprechen, aus welcher die zentrale Steuereinheit das Signal des Ultraschallsensors von dem Signal des Beschleunigungssensors unterscheiden kann. Von einer jeweils getrennten Auswertung des Ausgangssignals des Ultraschallsensors bzw. des Ausgangssignals des Beschleunigungssensors wird Abstand genommen, da dies einen zu großen Verkabelungsaufwand im Kraftfahrzeug nach sich zieht und für die Weiterverarbeitung beide Signale vorliegen müssen, was jedoch zu einer zeitlichen Verzögerungen führen kann. Diese Kosten- und/oder Zeitreduktion wirkt sich insbesondere immer dann vorteilhaft aus, wenn mehrere, je einen Ultraschallsensor und einen Beschleunigungssensor enthaltende Sensoreinheiten am Kraftfahrzeug verbaut werden. Die zentrale Steuereinheit des Kraftfahrzeugs kann über eine Fahrzeugkommunikationsverbindung, beispielsweise über einen Bussystem, wie CAN-, LIN- oder Flex-Ray-Bus, mit der Sensoreinheit verbunden sein, die ebenfalls über das Bussystem mit mindestens einem Fußgängerschutzsystem verbunden sein kann.

Um eine möglichst zuverlässige Voraussage einer Kollision zu gewährleisten, kann vor Aktivierung des Fußgängerschutzsystems die Auswertung des Signals der Sensoreinheit in Abhängigkeit von einer Geschwindigkeit des Kraftfahrzeugs erfolgen. Die Geschwindigkeit stellt dabei ein wesentliches Kriterium für einen möglichen Schaden dar, welcher bei einer Kollision des Fußgängers mit dem Kraftfahrzeug entstehen kann. Die Geschwindigkeit kann dabei auf unterschiedliche Art und Weise ermittelt werden. Es kann sein, dass als Geschwindigkeitssignal ein Drehzahlsignal eines Rades des Kraftfahrzeugs herangezogen wird. Alternativ können aber auch Daten aus einem Navigationssystem zur Geschwindigkeitsbestimmung herangezogen werden.

Es kann sein, dass bei Unterschreitung eines Schwellwerts von der Geschwindigkeit des Kraftfahrzeugs der Ultraschallsensor ausschließlich eine genaue Abstandsmessung zu einem Objekt in der Umgebung des Kraftfahrzeugs ausführt, welche in einer Fahrerassistenzanzeige dargestellt wird. In dem Fall der Unterschreitung der Schwellwerte kann es sein, dass der Beschleunigungssensor in der Sensoreinheit deaktiviert ist, um Strom zu sparen oder Störungen im Ablauf der Arbeitsweise des zentralen Steuergeräts zu unterbinden. Da bei einer sehr geringen Geschwindigkeit davon ausgegangen werden kann, dass ein Aufprall eines Objekts, vorzugsweise eines Fußgängers, auf das Kraftfahrzeug so gut wie kein Schaden verursacht, wird mittels des Ultraschallsensors nur die genaue Abstandsmessung durchgeführt, während auf eine Aufprallbestimmung ganz verzichtet wird.

Es kann sein, dass als Ultraschallsensor ein Bestandteil einer Einparkvorrichtung verwendet wird, was den Vorteil hat, dass bereits an sich im Kraftfahrzeug vorhandene Ultraschallsensoren für die schnelle Kollisionsvorbereitung des Kraftfahrzeugs genutzt werden, was die Kosten für die Ausführung des Verfahrens reduziert.

Wird der Schwellwert von der Geschwindigkeit des Kraftfahrzeugs überschritten, so kann der Ultraschallsensor ausschließlich zur Objekterkennung genutzt werden. Mittels dieser Objekterkennung kann eine Kollision vorhergesagt werden, so dass bereits vor dem tatsächlichen Auftreffen des Objektes auf das Kraftfahrzeug eine mögliche Kollision erkannt wird. Die Objekterkennung zieht zwar eine geringe Auflösung des Ultraschallsensors nach sich, ermöglicht dafür aber eine größere Reichweite.

Darüber hinaus können der Beschleunigungssensor und/oder das Fußgängerschutzsystem des Kraftfahrzeugs bei Erkennung eines Objekts durch den Ultraschallsensor aktiviert werden. Ausgehend von der Feststellung eines Objektes im nahen Bereich des Kraftfahrzeuges wird das Fußgängerschutzsystem vorsorglich schon aktiviert, um dieses bei einer tatsächlichen Kollision sehr schnell auslösen zu können. Somit erlaubt die Kombination von Hinderniserkennung durch den Ultraschallsensor und sensitiver Kollisionserkennung durch den Beschleunigungssensor in einem einzigen Sensorsystem eine sehr hohe Reaktionsgeschwindigkeit, da durch den Stand-by-Zustand von Beschleunigungssensor und/oder Fußgängerschutzsystem ein schnelleres Auslösen des Beschleunigungssensors und somit des Fußgängerschutzsystems möglich wird.

Anstelle der Aktivierung des Beschleunigungssensors und/oder des Fußgängerschutzsystems bei Erkennung eines Objekts können der Beschleunigungssensor und/oder das Fußgängerschutzsystem in Abhängigkeit von der Geschwindigkeit des Kraftfahrzeugs aktiviert werden. Dies führt insbesondere bei hohen Geschwindigkeiten des Kraftfahrzeuges zu einer frühzeitigen Scharfstellung der Mittel, welche für den Aufprallschutz relevant sind.

Die Aufgabe der Erfindung wird ebenfalls gelöst durch eine Vorrichtung zur schnellen Kollisionsvorbereitung eines Kraftfahrzeugs, welches mit zumindest einer Sensoreinheit, die einen Ultraschallsensor und einen Beschleunigungssensor umfasst, gekoppelt ist und ein Signal der Sensoreinheit zur Kollisionserkennung auswertet. Bei der erfindungsgemäßen Vorrichtung ist vorgesehen, dass eine Auswerteeinheit Signale von mehreren, mit vorgegebenen Abständen, insbesondere direkt, in einem Stoßfänger am Kraftfahrzeug verbauten Sensoreinheiten empfängt, wobei jede Sensoreinheit ein gemeinsames Signal des Ultraschallsensors und des Beschleunigungssensors erzeugt, und in Abhängigkeit von der Auswertung der Signale der Sensoreinheiten ein Fußgängerschutzsystem vor einer Kollision aktiviert. Auf diese Art und Weise kann eine vorbeugende Erkennung einer Kollision erreicht werden, da die Objekterkennung mittels des Ultraschallsensors erfolgt, bevor es zur Kollision kommt. Dies hat ein hohe Reaktionsgeschwindigkeit beim Auslösen des Fußgängerschutzsystems zur Folge, da das Fußgängerschutzsystem bereits bei Detektion einer möglichen Kollision scharfgeschaltet ist und daher das Auslösen des Fußgängerschutzsystems unverzüglich nach der Detektion des Aufpralls erfolgen kann. Dies trägt dazu bei, dass der Schaden, welchen der auf ein Kraftfahrzeug aufprallender Fußgänger nimmt, minimiert wird.

Zur schnelleren und exakteren Klassifizierung einer Kollision können sensible Beschleunigungssensoren, sogenannte Nieder-g-Sensoren, eingesetzt werden, welche einen Messbereich von wenigen, beispielsweise 2g aufweisen, wobei g für die Erdbeschleunigung von 9,81 m/s⁻² steht. Bisher übliche im Vorderbau eines Kraftfahrzeugs verbaute Airbagsensoren sind mit einem 800-g-Beschleunigungssensor ausgestattet, welcher allerdings für den Fußgängerschutz zu ungenau und zu unempfindlich ist. Mittels der Niedrig - g-Beschleunigungssensoren kann eine Klassifizierung einer Kollision bereits dann erfolgen, wenn noch keinerlei plastische oder elastische Verformungen des Stoßfängers des Kraftfahrzeuges aufgetreten sind. Aus diesem Grund kann die Sensoreinheit, welche den Beschleunigungssensor und den Ultraschallsensor enthält, direkt im Stoßfänger des Kraftfahrzeugs verbaut werden.

Es kann sein, dass ein Geschwindigkeitssensor ein Geschwindigkeitssignal des Kraftfahrzeugs an die Auswerteeinheit sendet, welche eine Auswertung der Signale der Sensoreinheiten in Abhängigkeit von der Geschwindigkeit des Kraftfahrzeugs durchführt. Das zentrale Steuergerät des Kraftfahrzeugs trifft dabei in Abhängigkeit von der Fahrzeuggeschwindigkeit eine Entscheidung darüber, ob die Abstandsmessung sehr exakt erfolgen muss, was zum Beispiel beim Einparken des Kraftfahrzeugs notwendig sein kann, oder ob es ausreichend sein kann, ein Objekt im Suchbereich der Ultraschallsensoren sicher zu erkennen, ohne den exakten Abstand zu wissen.

Vorzugsweise wird in der erfindungsgemäßen Vorrichtung bei der schnellen Kollisionsvorbereitung das in einem Bereich der zu erwartenden Kollision am Kraftfahrzeug positionierte Fussgängerschutzsystem durch die Auswerteeinheit aktiviert. Durch die Verwendung einer Vielzahl von Sensoreinheiten, die nicht nur im Stoßfänger, sondern auch seitlich an dem Kraftfahrzeug angeordnet sein können, können auch Radfahrer erfasst werden, wenn die entsprechenden Sensoreinheiten in den Seitenflügeln der Stoßfänger verbaut sind.

Ebenso ist es möglich, die Sensoreinheiten, welche den Ultraschallsensor und den Beschleunigungssensor integriert in sich tragen, im hinteren Stoßfänger des Kraftfahrzeugs zu verbauen. Daraus ergeben sich zusätzliche Funktionen. So können zum Beispiel bei einer vorausschauenden Erkennung einer Kollision durch ein sich von hinten näherndes Objekt die Gurtstraffer aktiviert werden, um einer Gefährdung der Fahrzeuginsassen bei einem Auffahrunfall vorzubeugen. Die gezielte lokale Auslösung des Fußgängerschutzsystems, beispielsweise ob nur ein linker oder ein rechter Frontscheibenairbag ausgelöst werden soll, erfolgt durch lokale Detektion von Beschleunigung bzw. je nach Aufprallort auf dem Stoßfänger. Es werden unterschiedlich starke Beschleunigungen von den üblicherweise vier bis sechs über den Stoßfänger verteilten Sensoreinheiten registriert. Der Bereich des Aufpralls kann durch das zentrale Steuergerät erkannt werden, da von jeder Sensoreinheit ein Signal ausgesendet wird, dass von der Stärke des Aufpralls abhängt. Das zentrale Steuergerät wird das Fußgängerschutzsystem auslösen, welche lokal im Bereich der Sensoreinheit angeordnet ist, welche das Aufprallsignal mit der höchsten Intensität ausgesendet hat.

Durch die Systemintegration von Beschleunigungssensor und Ultraschallsensor in nur einer Sensoreinheit muss nur ein Einbauort am Kraftfahrzeug für die beiden Sensoren vorgehalten werden. Die Verwendung dieser Sensoreinheit reduziert Kosten und Gewicht des Kabelbaums, da ein zusätzlicher Kabelbaum für separate Sensoren entfällt. Genauso entfallen zusätzliche Befestigungselemente für zusätzliche Sensoren. Der Verzicht auf separate Sensoren reduziert somit den Montageaufwand und weiterhin das Gewicht des Kraftfahrzeugs.

Weitere, die Erfindung verbessernde Maßnahmen ergeben sich aus der nachfolgenden Beschreibung zu einem Ausführungsbeispiel der Erfindung, welches in den Figuren schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Es zeigen:
- Fig. 1: eine schematische Darstellung eines Kraftfahrzeugs mit Ultraschall-Beschleunigungs-Sensoreinheiten an Front- und Stoßfänger,
- Fig. 2: eine Prinzipdarstellung der Wirkungsweise einer Sensoreinheit.mit Ultraschallsensor und Beschleunigungssensor,
- Fig. 3: eine Prinzipdarstellung der erfindungsgemäßen Sensoreinheit,
- Fig. 4: ein Schema eines erfindungsgemäßen Verfahrens.

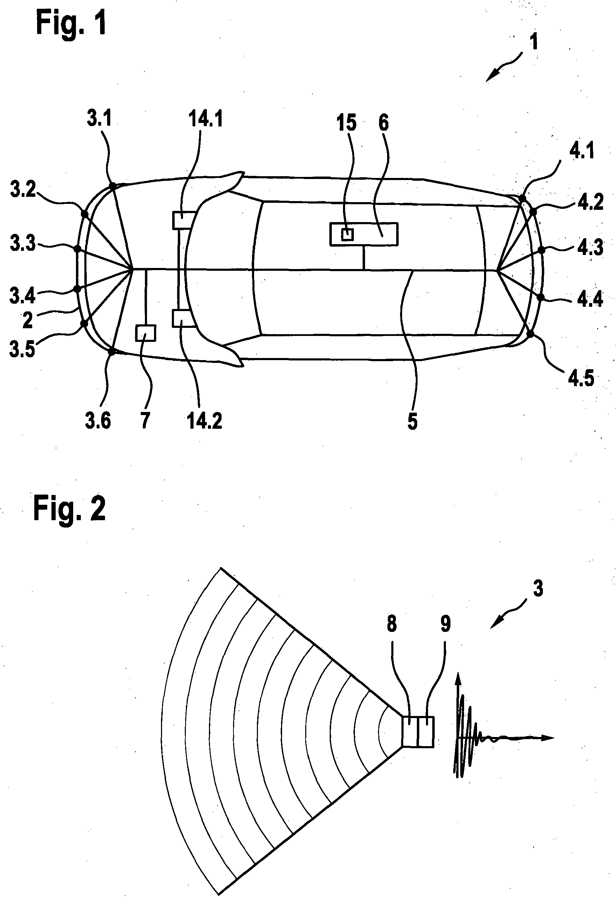

In Fig. 1 ist ein Kraftfahrzeug dargestellt, in welchem mehrere Sensoreinheiten verbaut sind, wobei jede Sensoreinheit einen Ultraschallsensor und einen Beschleunigungssensor umfasst. Im Kraftfahrzeug 1 sind im Frontbereich am Stoßfänger 2 sechs Sensoreinheiten 3.1 bis 3.6 verbaut, während im Stoßfänger der Fondseite des Kraftfahrzeugs 1 fünf Sensoreinheiten 4.1 bis 4.5.verbaut.sind, in welchen je ein Ultraschallsensor 8 und ein Beschleunigungssensor 9 integriert ist. Die Sensoreinheiten 3, 4 sind beispielsweise an einen CAN-Bus 5 (als Synonym für die bereits erwähnten Bussysteme genannt) des Kraftfahrzeugs 1 angeschlossen, welcher eine zentrale Kommunikationsdatenleitung im Kraftfahrzeug 1 darstellt. Der CAN-Bus 5 verbindet die Sensoreinheiten 3, 4 mit einem zentralen Steuergerät 6 des Kraftfahrzeugs. Gleichzeitig erhält das zentrale Steuergerät 6 über den CAN-Bus 5 von einem Raddrehzahlsensor 7 des Kraftfahrzeugs 1 Informationen über die Fahrzeuggeschwindigkeit. Das Steuergerät 6 umfasst eine Auswerteeinheit 15 in Form eines Mikroprozessors. Zwei Fussgängerschutzsysteme 14.1 und 14.2 sind ebenfalls an den CAN-Bus angeschlossen und können über diesen mit dem zentralen Steuergerät 6 kommunizieren. Die Erfindung ist aber nicht auf zwei Fußgängerschutzsysteme 14.1, 14.2 beschränkt, sondern kann mehrere umfassen.

Fig. 2 zeigt eine der Sensoreinheiten 3, 4, welche einen Ultraschallsensor 8 zur Messung des Abstands zu einem Objekt oder die Erkennung eines Objekts mittels Ultraschall und einen Beschleunigungssensor 9 zur Messung einer Beschleunigung bei Kollision mit dem Objekt umfasst. Alle am Kraftfahrzeug 1 verwendeten Sensoreinheiten 3, 4 sollen dabei gleichartig aufgebaut sein. Der Ultraschallsensor 8 gibt dabei Ultraschallwellen in Richtung der Bewegungsrichtung des Kraftfahrzeugs 1 aus, während der Beschleunigungssensor 9 nur ein Signal ausgibt, wenn ein Aufprall registriert wurde. Das Signal des Ultraschallsensors 8 und das Signal des Beschleunigungssensors 9 werden zu einem gemeinsamen Signal kombiniert, welches von der Sensoreinheit 8, 9 abgegeben wird.

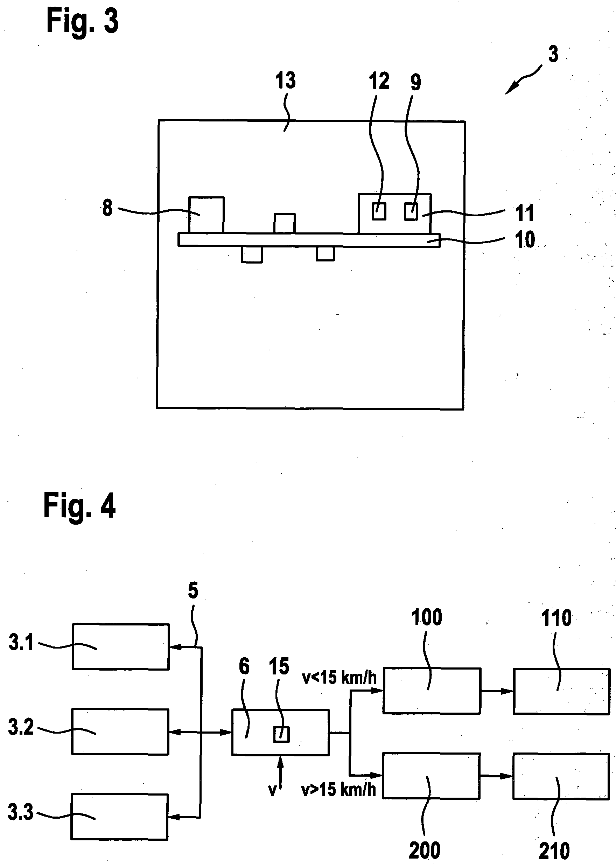

Eine Prinzipdarstellung des mechanischen Aufbaus einer solchen Sensoreinheit 3, 4 ist in Fig. 3 dargestellt. Der Ultraschallsensor 8 und ein, den Beschleunigungssensor 9 umfassendes Beschleunigungsmodul 11 sind neben weiteren passiven elektrischen Bauelementen auf einer Leiterplatte 10 positioniert, die in einem Sensorgehäuse 13 der Sensoreinheit 3 angeordnet ist. Ein solches Beschleunigungsmodul 11 kann dabei in einem LGA-Package den Beschleunigungssensor 9, eine Auswerteelektronik 12 zum Auswerten des Beschleunigungssignals und diverse passive Bauelemente, wie beispielsweise Kondensatoren, enthalten. Ein solches LGA-Package ist sehr klein und besitzt beispielsweise Abmessungen von L x B x H = 5 x 4 x 1,2 mm. Aufgrund dieser kleinen Geometrie ist es für eine Systemintegration besonders geeignet. Im vorliegenden Fall ist das Beschleunigungsmodul 11 in die, den Ultraschallsensor 8 umfassende Sensoreinheit 3 integriert, welche eine Einparkhilfe darstellt. Der in dem Beschleunigungsmodul 11 verbaute Beschleunigungssensor 9 ist ein sogenannter Nieder-g-Sensor und weist dabei eine erhöhte Empfindlichkeit gegenüber Kollisionen mit einem Objekt auf.

Ein Ausführungsbeispiel für das erfindungsgemäße Verfahren ist in Fig. 4 dargestellt. Die Sensoreinheiten 3, 4, von welchen der Übersichtlichkeit halber nur drei dargestellt sind, senden jeweils ein Sensorsignal an das zentrale Steuergerät 6, wobei das Sensorsignal sowohl das Ausgangssignal des Ultraschallsensors 8 als auch das Ausgangssignal des Beschleunigungssensors 9 umfasst, welche in dem gemeinsamen Sensorsignal kombiniert sind. Das Steuergerät 6 empfängt gleichzeitig ein Signal von einem Raddrehzahlsensor 7. In Abhängigkeit von der, mit dem Raddrehzahlsensor 7 gemessenen Fahrzeuggeschwindigkeit v, unterscheidet die Auswerteinheit 15 des zentralen Steuergerätes 6 zwischen zwei Zuständen. Wird in einem ersten Modus festgestellt, dass das Kraftfahrzeug 1 nur eine sehr langsame Fahrzeuggeschwindigkeit v fährt, beispielsweise v < 15 km/h, wird jeder Ultraschallsensor 8 der Sensoreinheiten 3, 4 auf eine exakte Abstandsmessung zu einem, im Erfassungsbereich des Ultraschallsensors 8 liegenden Objekt eingestellt (Schritt 100). Eine solche sehr langsame Kraftfahrzeuggeschwindigkeit v wird in der Regel bei einem Einparkvorgang gefahren. Die exakte Abstandsmessung wird dem Fahrer des Kraftfahrzeugs 1 über eine Assistenzanzeige angezeigt (Schritt 110). In diesem Fall wird davon ausgegangen, dass eine Kollision mit Objekten nicht auftritt, weshalb die Beschleunigungssensoren 9 deaktiviert sein können. Fußgängerschutzmaßnahmen sind dabei nicht erforderlich.

Stellt aber die Auswerteeinheit 15 des zentralen Steuergerätes 6 fest, dass die Fahrzeuggeschwindigkeit v den Schwellwert von beispielsweise v = 15 km/h überschreitet, wird der Ultraschallsensor 8 jeder Sensoreinheit 3, 4 in einen zweiten Modus geschaltet, wo nur noch eine Objekterkennung möglich ist (Schritt 200). In diesem Modus ist die Objekterkennung mit einer gröberen Auflösung möglich aber keinerlei exakte Abstandsmessung. Wird durch den Ultraschallsensor 8 ein Objekt im Erfassungsbereich erkannt, werden die in den Sensoreinheiten 3, 4 integrierten Beschleunigungssensoren 9 aktiviert und ein mit dem Beschleunigungssensor 9 verbundenes Fußgängerschutzsystem 14, beispielsweise ein Airbag, "scharf" geschaltet, d.h. in Alarmbereitschaft versetzt (Schritt 210). Wird dann eine Kollision mit dem Objekt von mindestens einem der Beschleunigungssensoren 9 detektiert, kann das Fußgängerschutzsystem 14 mit einer sehr kurzen Verzögerung gezielt ausgelöst werden.

Das zentrale Steuergerät 6 unterscheidet aufgrund der Signalstärke des Sensorsignals, wo die Kollision am Kraftfahrzeug 1 stattgefunden hat. Dabei wird ein nahe dieser Sensoreinheit 3, 4 angeordnetes Fußgängerschutzsystem 14 lokal ausgelöst.

## Patentansprüche

1. Verfahren zur schnellen Kollisionsvorbereitung eines Kraftfahrzeugs, bei welchem ein Signal einer Sensoreinheit (3, 4), die einen Ultraschallsensor (8) und einen Beschleunigungssensor (9) umfasst, zur Kollisionserkennung ausgewertet wird, **dadurch gekennzeichnet, dass** die Sensoreinheit (3, 4) ein gemeinsames Signal des Ultraschallsensors (8) und des Beschleunigungssensors (9) erzeugt, wobei das Signal des Beschleunigungssensors auf das Signal des Ultraschallsensors aufmoduliert wird, und ein Fußgängerschutzsystem (14) vor der eigentlichen Kollision aktiviert wird.

2. Verfahren nach Anspruch 1, **dadurch gekennzeichnet, dass** vor Aktivierung des Fußgängerschutzsystems (14) die Auswertung des Signals der Sensoreinheit (3, 4) in Abhängigkeit von einer Geschwindigkeit (v) des Kraftfahrzeugs (1) erfolgt.

3. Verfahren nach einem der vorhergehenden Ansprüche, **dadurch gekennzeichnet, dass** bei Unterschreitung eines Schwellwerts von der Geschwindigkeit (v) des Kraftfahrzeugs (1) der Ultraschallsensor (8) ausschließlich eine genaue Abstandsmessung zu einem Objekt in der Umgebung des Kraftfahrzeugs (1) ausführt, welches in einer Fahrerassistenzanzeige dargestellt wird.

4. Verfahren nach einem der vorhergehenden Ansprüche, **dadurch gekennzeichnet, dass** als Ultraschallsensor (8) ein Bestandteil einer Einparkvorrichtung verwendet wird.

5. Verfahren nach einem der vorhergehenden Ansprüche, **dadurch gekennzeichnet, dass** bei Überschreitung des Schwellwerts von der Geschwindigkeit (v) des Kraftfahrzeugs (1) der Ultraschallsensor (8) ausschließlich zur Objekterkennung genutzt wird.

6. Verfahren nach einem der vorhergehenden Ansprüche, **dadurch gekennzeichnet, dass** der Beschleunigungssensor (9) und/oder das Fußgängerschutzsystem (14) des Kraftfahrzeugs (1) bei Erkennung eines Objekts durch den Ultraschallsensor (8) aktiviert werden.

7. Verfahren nach einem der vorhergehenden Ansprüche, **dadurch gekennzeichnet, dass** der Beschleunigungssensor (9) und/oder wenigstens das Fußgängerschutzsystem (14) in Abhängigkeit von der Geschwindigkeit (v) des Kraftfahrzeugs (1) aktiviert werden.

8. Vorrichtung zur schnellen Kollisionsvorbereitung eines Kraftfahrzeugs, welches mit zumindest einer Sensoreinheit (3, 4), die einen Ultraschallsensor (8) und einen Beschleunigungssensor (9) umfasst, gekoppelt ist, und ein Signal der Sensoreinheit (3, 4) zur Kollisionserkennung auswertet, **dadurch gekennzeichnet, dass** eine Auswerteeinheit (15) Signale von mehreren, mit vorgegebenen Abständen, insbesondere direkt, in einem Stoßfänger (2) am Kraftfahrzeug (1) verbauten Sensoreinheiten (3, 4) empfängt, wobei jede Sensoreinheit (3, 4) ein gemeinsames Signal des Ultraschallsensors (2) und des Beschleunigungssensors (9) erzeugt, wobei das Signal des Beschleunigungssensors auf das Signal des Ultraschallsensors aufmoduliert wird und in Abhängigkeit von der Auswertung der Signale der Sensoreinheiten (3, 4) ein Fußgängerschutzsystem (14) vor einer Kollision aktiviert.

9. Vorrichtung nach einem der vorhergehenden Ansprüche, **dadurch gekennzeichnet, dass** ein Geschwindigkeitssensor (7) ein Geschwindigkeitssignal des Kraftfahrzeugs (1) an die Auswerteeinheit (15) sendet, welche eine Auswertung der Signale der Sensoreinheiten (3, 4) in Abhängigkeit von einer Geschwindigkeit (v) des Kraftfahrzeugs (1) durchführt.

10. Vorrichtung nach einem der vorhergehenden Ansprüche, **dadurch gekennzeichnet, dass** das, in einem Bereich der zu erwartenden Kollision am Kraftfahrzeug (1) positionierte Fußgängerschutzsystem (14) durch die Auswerteeinheit (15) aktiviert wird.

## Claims

1. Method for rapid collision preparation of a motor vehicle, in which a signal from a sensor unit (3, 4), which comprises an ultrasonic sensor (8) and an acceleration sensor (9), is evaluated in order to detect a collision, **characterized in that** the sensor unit (3, 4) generates a common signal from the ultrasonic sensor (8) and from the acceleration sensor (9), the signal from the acceleration sensor being modulated onto the signal from the ultrasonic sensor, and a pedestrian protection system (14) is activated before the actual collision.

2. Method according to Claim 1, **characterized in that** the signal from the sensor unit (3, 4) is evaluated on the basis of a speed (v) of the motor vehicle (1) before the pedestrian protection system (14) is activated.

3. Method according to one of the preceding claims, **characterized in that**, if a threshold value is undershot by the speed (v) of the motor vehicle (1), the ultrasonic sensor (8) carries out only an accurate distance measurement with respect to an object in the environment of the motor vehicle (1) which is displayed on a driver assistance display.

4. Method according to one of the preceding claims, **characterized in that** a part of a parking apparatus is used as the ultrasonic sensor (8).

5. Method according to one of the preceding claims, **characterized in that**, if the threshold value is exceeded by the speed (v) of the motor vehicle (1), the ultrasonic sensor (8) is used only to detect an object.

6. Method according to one of the preceding claims, **characterized in that** the acceleration sensor (9) and/or the pedestrian protection system (14) of the motor vehicle (1) is/are activated if an object is detected by the ultrasonic sensor (8).

7. Method according to one of the preceding claims, **characterized in that** the acceleration sensor (9) and/or at least the pedestrian protection system (14) is/are activated on the basis of the speed (v) of the motor vehicle (1).

8. Apparatus for rapid collision preparation of a motor vehicle, which is coupled to at least one sensor unit (3, 4), which comprises an ultrasonic sensor (8) and an acceleration sensor (9), and evaluates a signal from the sensor unit (3, 4) in order to detect a collision, **characterized in that** an evaluation unit (15) receives signals from a plurality of sensor units (3, 4) which are installed in a bumper (2) on the motor vehicle (1) at predefined distances, in particular directly, each sensor unit (3, 4) generating a common signal from the ultrasonic sensor (2) and from the acceleration sensor (9), the signal from the acceleration sensor being modulated onto the signal from the ultrasonic sensor, and activates a pedestrian protection system (14) on the basis of the evaluation of the signals from the sensor units (3, 4) before a collision.

9. Apparatus according to one of the preceding claims, **characterized in that** a speed sensor (7) transmits a speed signal from the motor vehicle (1) to the evaluation unit (15) which evaluates the signals from the sensor units (3, 4) on the basis of a speed (v) of the motor vehicle (1).

10. Apparatus according to one of the preceding claims, **characterized ,in that** the pedestrian protection system (14) positioned on the motor vehicle (1) in a region of the expected collision is activated by the evaluation unit (15).

## Revendications

1. Procédé de préparation rapide à la collision d'un véhicule automobile, dans lequel un signal d'une unité à capteur (3, 4), qui comprend un capteur à ultrasons (8) et un capteur d'accélération (9), est évalué à des fins de détection de collision, **caractérisé en ce que** l'unité à capteur (3, 4) génère un signal commun du capteur à ultrasons (8) et du capteur d'accélération (9), dans lequel le signal du capteur d'accélération est modulé sur le signal du capteur à ultrasons, et un système de protection pour piétons (14) est activé avant la collision proprement dite.

2. Procédé selon la revendication 1, **caractérisé en ce que**, avant l'activation du système de protection pour piétons (14), l'évaluation du signal de l'unité à capteur (3, 4) s'effectue en fonction d'une vitesse (v) du véhicule automobile (1).

3. Procédé selon l'une quelconque des revendications précédentes, **caractérisé en ce que**, lorsque la vitesse (v) du véhicule automobile (1) s'abaisse en dessous d'une valeur de seuil, le capteur à ultrasons (8) effectue exclusivement une mesure de distance précise d'un objet dans l'environnement du véhicule automobile (1), laquelle mesure est représentée sur un affichage d'assistance à la conduite.

4. Procédé selon l'une quelconque des revendications précédentes, **caractérisé en ce qu'**une partie d'un dispositif d'aide au stationnement est utilisée en tant que capteur à ultrasons (8).

5. Procédé selon l'une quelconque des revendications précédentes, **caractérisé en ce que**, lors que la vitesse (v) du véhicule automobile (1) dépasse la valeur de seuil, le capteur à ultrasons (8) est utilisé exclusivement pour la détection d'un objet.

6. Procédé selon l'une quelconque des revendications précédentes, **caractérisé en ce que** le capteur d'accélération (9) et/ou le système de protection pour piétons (14) du véhicule automobile (1) sont activés lors de la détection d'un objet par le capteur à ultrasons (8).

7. Procédé selon l'une quelconque des revendications précédentes, **caractérisé en ce que** le capteur d'accélération (9) et/ou au moins le système de protection pour piétons (14) sont activés en fonction de la vitesse (v) du véhicule automobile (1).

8. Dispositif de préparation rapide à la collision d'un véhicule automobile, qui est couplé à au moins une unité à capteur (3, 4), qui comprend un capteur à ultrasons (8) et un capteur d'accélération (9) et évalue un signal de l'unité à capteur (3, 4) à des fins de détection de collision, **caractérisé en ce qu'**une unité d'évaluation (15) reçoit des signaux en provenance d'une pluralité d'unités à capteurs (3, 4) montées à des distances prédéterminées, notamment directement, dans un pare-chocs (2) sur le véhicule automobile (1), dans lequel chaque unité à capteur (3, 4) génère un signal commun du capteur à ultrasons (2) et du capteur d'accélération (9), dans lequel le signal du capteur d'accélération est modulé sur le signal du capteur à ultrasons et un système de protection pour piétons (14) est activé en fonction de l'évaluation des signaux des unités à capteurs (3, 4) avant une collision.

9. Dispositif selon l'une quelconque des revendications précédentes, **caractérisé en ce qu'**un capteur de vitesse (7) envoie un signal de vitesse du véhicule automobile (1) à l'unité d'évaluation (15) qui effectue une évaluation des signaux des unités à capteurs (3, 4) en fonction d'une vitesse (v) du véhicule automobile (1).

10. Dispositif selon l'une quelconque des revendications précédentes, **caractérisé en ce que** le système de protection pour piétons (14), positionné dans une région de la collision attendue sur le véhicule automobile (1), est activé par l'unité d'évaluation (15).
